# EUROPEAN PATENT APPLICATION

(11) **EP 1 968 339 A1**
(43) Date of publication of application: **10.09.2008**
(21) Application number: 07106759.9
(22) Date of filing: 23.04.2007
(51) Int. Cl.: H04Q 7/38

(54) **Apparatus and associated method for facilitating I-WLAN selection**

(30) Priority: 07.03.2007 US 683265
(71) Applicant: Research In Motion Limited, Waterloo, Ontario N2L 3W8 (CA)
(72) Inventor: Buckley, Adrian, Tracy, CA 95376 (US)
(74) Representative: Roberts, Gwilym Vaughan

(57) **Abstract**

Apparatus, and an associated method, for selecting an EHPLMN pursuant to I-WLAN PLMN selection. An EHPLMN listing is created and maintained at user equipment. Available I-WLAN PLMNs are collected and buffered. A comparator compares entries on the EHPLMN listing and the collected identities. And, I-WLAN PLMN selection is made responsive to the comparison.

## Description

The present invention relates generally to a manner by which to perform I-WLAN PLMN (Interworking-Wireless Local Area Network Public Land Mobile Network) selection in which a wireless device selects a PLMN with which to communicate by way of an I-WLAN. More particularly, the present invention relates to apparatus, and an associated method, by which to perform the I-WLAN PLMN selection in which EHPLMNs (Equivalent Home Public Land Mobile Networks) are identified and considered pursuant to a selection process.

An EHPLMN list or file is maintained at the wireless device. When the wireless device performs scanning operations to make detection, and then make selection, pursuant to I-WLAN PLMN selection procedures, the EHPLMN list is accessed. If an available I-WLAN PLMN is available and is also on the EHPLMN list, selection is made thereof. And, if a plurality of such PLMNs is available, then further selection is made from amongst them, automatically or manually, pursuant to a prioritization scheme.

### Background of the Invention

Advancements in communication technologies have permitted the development and deployment of many varied types of communication systems. Multiuser, radio communication systems are amongst the communication systems that have been developed and deployed making use of the communication technology advancements. A cellular communication system is an exemplary type of radio communication system, the use of which is pervasive in modem society. A cellular communication system, referred to herein as a Public Land Mobile Network (PLMN), is generally constructed to operate in conformity with operational parameters that are set forth in an operating specification. Regulatory bodies have promulgated successive generations of operating standards and corresponding successive generations of cellular communication systems have been deployed that operate in conformity with such operating standards.

The network infrastructures of multiple generations of cellular communication systems might well be installed to encompass, and to be concurrently operable, over common geographical areas. Additionally, network infrastructures of similar cellular communication systems, operated by different network operators might also be installed over common geographical areas. And, additionally, network infrastructures of similar cellular communication systems, operated, e.g., by different network operators might also be installed over a common geographical area.

A Wireless Local Area Network (WLAN) is also an exemplary type of radio communication system. A WLAN is operable, at least in various aspects, in manners that are analogous to operation of cellular communication systems. Wireless local area networks, are, however, generally implemented as small-area systems, encompassing areas that are generally smaller than the areas typically encompassed by a cellular communication system. A wireless local area network, at least in various additional aspects, is a technological extension of a conventional local area network. Both a conventional local area network and a wireless local area network provide generally for the communication of packet-formatted data pursuant to data-intensive packet communication services.

Wireless devices, variously referred to herein as mobile equipment, mobile stations, and User Equipment (UE) are sometimes capable of selecting with which of the wireless local area network and PLMN to communicate. Additionally, interworking between wireless local area networks and the networks of cellular communication systems is provided so that the wireless device is capable of communicating with a PLMN, by way of a wireless local area network. For example, in an existing I-WLAN (Interworking-Wireless Local Area Network) specification, network selection procedures are defined. The procedures are followed to selection of a public land mobile network with which the wireless device shall select through which to communicate by way of an I-WLAN. It is generally preferred for the wireless device to communicate with a HPLMN (Home PLMN) associated with the wireless device or an equivalent to the HPLMN, referred to as an Equivalent Home Public Land Mobile Network. However, operators of different WLANs and PLMNs might enter into agreements, exit agreements, combined entities, etc. An EPLMN is, therefore, not always an unchanging, static identification.

In at least one scheme, an EHPLMN list is provided to, and maintained at, the wireless device. However, the EHPLMN concept, and its use, has not been extended to I-WLAN operation.

If a manner could be provided by which to extend the concept of an EHPLMN to an I-WLAN, improved communication would be possible.

It is in light of this background information related to radio communications utilizing I-WLANs that the significant improvements of the present invention have evolved.

### Brief Description of the Drawings

Figure 1 illustrates a functional block diagram of a radio communication system in which an embodiment of the present invention is operable.

Figure 2 illustrates a process diagram representative of the process of operation of an embodiment of the present invention.

Figure 3 illustrates a method flow diagram representative of the method of operation of an embodiment of the present invention.

### Detailed Description

The present invention, accordingly, advantageously provides apparatus, and an associated method, by which to perform I-WLAN PLMN selection in which a wireless device selects a PLMN with which to communicate by way of an I-WLAN.

Through operation of an embodiment of the present invention, a manner is provided by which to perform the I-WLAN PLMN selection in which EHPLMNs are identified and considered pursuant to a selection process.

In one aspect of the present invention, an EHPLM list or file is maintained at the wireless device. The list is, e.g. stored with memory in the Mobile Equipment or stored on a removable memory module such as, but not limited to, (U)SIM, R-UIM, Compact flash, Micro SD card, Memory stick etc. When the wireless device performs scanning operations to make detection and then make selection, pursuant to I-WLAN PLMN selection procedures, the EHPLMN list in accessed. If a PLMN, via an I-WLAN, is available and is also on the EHPLMN list, the PLMN, and its associated I-WLAN, is selected as the PLMN with which to attempt to communicate. If more than one available PLMN is also listed on the EHPLMN list, then selection is made from amongst the available PLMNs pursuant to a prioritization scheme.

In another aspect of the present invention, an EHPLMN listing is created and maintained at the wireless device. The listing is created at a memory element of the wireless device, embodied, e.g., at a SIM (Subscriber Identity Module), at a UICC (Universal Integrated Circuit Card), or other removable storage element. The EHPLMN listing is stored along with, e.g., a user-controlled PLMN selection list and an operator-controlled PLMN selection list as part of a listing set. The entries on the EHPLMN listing are, e.g., updateable or changeable by operator or user selection. As the categorization of a PLMN as an EHPLMN is dynamic, updating of the entries on the listing is correspondingly dynamically changeable. Or, the entries in the EHPLMN listing are provided at the initiation of a service subscription.

In another aspect of the present invention, the wireless device obtains lists of PLMNs available, by way of an I-WLAN, with which communication connectivity is provided. When the wireless device is positioned at a location within the coverage area of more than one WLAN, each WLAN, identified by its respective SSID (Service Set Identifier) and with which the wireless device is able to communicate, is interrogated for its PLMN list.

In another aspect of the present invention, the wireless device interrogates the I-WLAN through generation and transmission of an alternative NAI (Network Access Identifier) that is of a value, or a syntax, that causes the sending of the PLMN list by the I-WLAN that receives the alternate NAI.

In another aspect of the present invention, the wireless device further buffers the PLMN list, sent by each I-WLAN. And, the I-WLAN, identified by its SSID, is indexed together with the PLMNs on each list.

In another aspect of the present invention, comparison is made between the entries contained on the EHPLMN listing and the PLMNs are that are buffered. Comparison identifies a PLMN, if any, that is contained both at the EHPLMN list and in the buffer. If a PLMN is so-identified, then the PLMN becomes a target PLMN. And, the wireless device selectably attempts to form a communication link with the associated I-WLAN, identified by its SSID, and through which communications with the target PLMN are possible.

In another aspect of the present invention, the EHPLMN listing further identifies a priority, or other preference indication associated with each PLMN of the listing. If a comparison between the buffered PLMN identities and the entries on the EHPLMN listing results in a plurality of PLMNs that are in common, then the prioritization or preference ordering is determinative of which of the PLMNs forms the target PLMN.

In another aspect of the present invention, when a target PLMN is identified, the target PLMN, and its associated I-WLAN, is automatically selected. Alternately, manual selection is performed by providing the user with the results of the comparison together with an opportunity to make selection of the target PLMN. A user interface is provided, such as a display on a user display and an input actuator provided on an input actuation keyboard.

Thereby, the user equipment is better able to make selection of a target PLMN that is an HPLMN or an EHPLMN. Communication failure, communication with a non-preferred PLMN, or other communication disability is less likely to occur.

In these and other aspects, therefore, apparatus, and an associated method, is provided for facilitating network selection at a wireless device. A memory device is configured to store a Public Land Mobile Network, PLMN, listing set. The PLMN listing set selectably has an Equivalent Home Public Land Mobile Network EHPLMN, listing. A detector is configured to detect I-WLAN, Interworking-Wireless Local Area Network, -associated, PLMN identities delivered to the UE. A selector is adapted to receive an indication of the PLMN listing set and of detections made by the detector. The selector is configured to permit selection responsive to comparisons made therebetween.

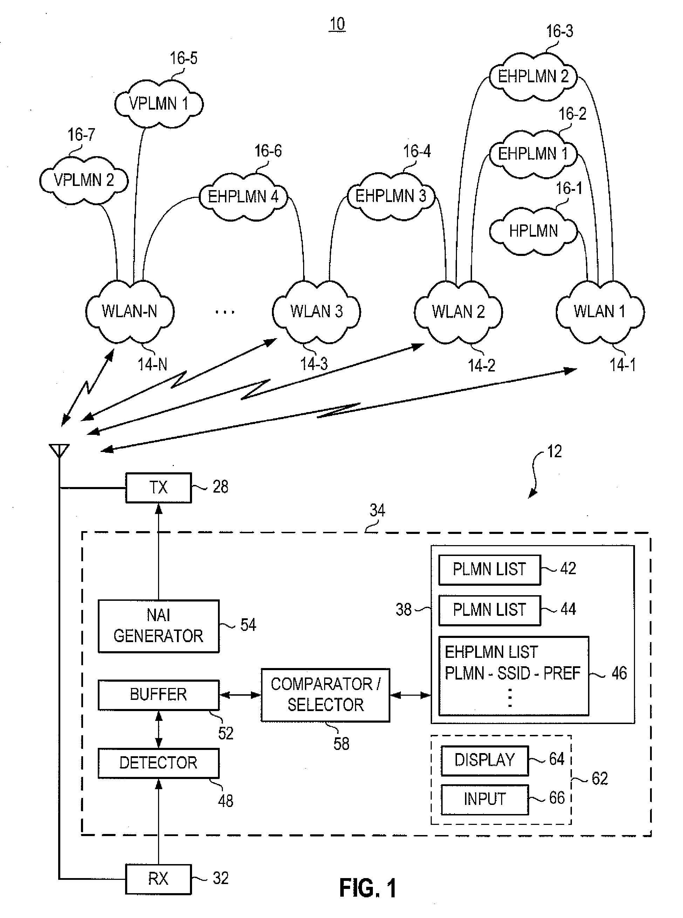

Referring first, therefore, to Figure 1, a radio communication system, shown generally at 10, provides for radio communications with the user equipment, of which the user equipment 12 is representative. While the element 12 shall be referred to herein as a user equipment (UE), the wireless device comprises a radio transceiver of configuration to permit its operation in any desired system, such as a UTRAN, a CDMA2000, EVDO, Wi-max system, etc. The user equipment 12 is shown to be positioned at a location within the coverage area of a plurality of Wireless Local Area Networks (WLANs) 14. The number of WLANs is merely exemplary. In an actual implementation, and depending upon the positioning of the user equipment, the number of WLANs in whose coverage area that the user equipment is positioned is likely to be different, or at least to be changeable, depending upon the positioning of the user equipment. Here the user equipment is shown to be positioned within the coverage areas of WLAN1 14-1, WLAN2 14-2, WLAN3 14-3, and WLAN-N 14-N.

The WLANs form interworking WLANs, 1-WLANs, having interworking unit functionality that provide for communication connectivity with public land mobile networks 16. Again, the number of, and connection configuration of, the public land mobile networks is merely exemplary. The public land mobile networks are variously identified as being a Home Public Land Mobile Network (HPLMN), an Equivalent Home Public Land Mobile Network (EHPLMN), or a Visited Public Land Mobile Network (VPLMN). The designations are made in terms of the designations relative to the user equipment 12. Other user equipment have different ones of the PLMNs variously defined.

The WLAN 14-1 is shown to be connected to the HPLMN 16-1, the EHPLMN 16-2, and the EHPLMN2 16-3. The WLAN2 14-2 is shown to be connected to the EHPLMN1 16-2, the EHPLMN2 16-3, and the EPHLMN3 16-4. The WLAN3 14-3 is shown to be connected to the EHPLMN3 16-4, and the EHPLMN4 16-6. And, the WLAN 14-N is shown to be connected to the EHPLMN4 16-6, the VPLMN 16-5 and a VPLMN2 16-7.

Through appropriate connection to a WLAN 14, communications are effectuable with a PLMN. As different ones of the WLANs are connected to different PLMNs, appropriate selection of the WLAN is determinative of communication connectivity with a PLMN. As noted previously, it is generally desirable that the user equipment communicate with its HPLMN or an equivalent HPLMN.

The user equipment includes transceiver circuitry, here represented by a transmit part 28 and a receive part 32 and apparatus 34 of an embodiment of the present invention. The apparatus facilitates network selection such that the user equipment is able to select to attempt to communicate with a WLAN that is connected to an EHPLMN or the HPLMN. The apparatus is shown to be formed of functional elements, implementable in any desired manner, including algorithms executable by processing circuitry or hardware equivalents thereof. And, while separately shown in Figure 1, the elements, or portions thereof, are implementable as portions of the transmit and receive parts of the user equipment.

The apparatus includes a memory device 38 that, in the exemplary implementation, forms a storage card, such as a SIM card or a UICC but alternately comprises other memory within the wireless device, such as a USIM, a R-UIM, a compact flash, a MicroSD card, a memory stick or other removable memory. In another implementation, the memory device comprises a non-removable memory element. And, in another implementation, both the removable and non-removable memory exist, and the contents of the removable memory are imaged, and then stored in the non-removable memory. The mobile equipment, in this implementation, is able to read and write to the memory locations of the EHPLMN listing in the removable memory. The memory element maintains a set of listings such as an operator-created PLMN listing 42, a user-created listing 44, and an EHPLMN listing 46. The EHPLMN listing 46 includes entries that identify EHPLMNs. In the exemplary implementation, the entries are dynamically updateable either by way of over-the-air updating procedures, local entry, or other updating mechanism so that the listing 46 contains an up-to-date listing of entries. The network entries are identified, as appropriate, pursuant to the specific protocols by which the individual ones of the networks are operable. The identifier, e.g., comprises an MCC/MNC (Mobile Country Code/Mobile Network Code) defined pursuant to 3GPP standards, an SSID (Service Set Identifier) defined pursuant to IEEE 802.11 standards, an SID (Session Identifier) defined pursuant to 3GPP2 standards, an NAI (Network Access Identifier) when a domain name portion is available, or any other appropriate identifier.

The apparatus further includes a detector 48. The detector detects signals broadcast by the respective WLANs and PLMN lists that form part of such signals. When detected, the PLMN lists are buffered at a buffer 52.

In the exemplary implementation, the apparatus also includes an Alternate Network Access Identifier (ANAI) generator 54 that generates an alternative NAI. When transmitted by the transmitter to successive ones of the WLANs 14, the alternative NAI precipitates the return of the PLMN list of the respective WLANs. The PLMN lists each identify the PLMNs directly connected to the respective 1-WLANs. Through generation of the alternative NAIs, the UE interrogates each SSID (I-WLAN) to determine which PLMNs are connected to the respective SSID. Interrogation continues until available SSIDs have been exhausted or a highest EHPLMN is located.

The apparatus further includes a comparator and selector 58. The comparator and selector operates to compare identities stored at the memory device 38 with identities buffered at the buffer 52 and, responsive to such comparisons, select a PLMN and associated I-WLAN with which to communicate. And, responsive to such selection, the transmit and receive parts of the user equipment are caused to operate in manners conforming to the selection made by the comparator and selector.

In the exemplary implementation, the function 58 first determines whether the memory device 38 includes an EPHMLN listing 46 and, if so, further to determine whether the listing includes entries. If the memory device does not include the listing 46 or the listing does not include entries, then the listings 42 or 44 are accessed and utilized pursuant to WLAN and PLMN selection. That is to say, if the EHPLMN listing is present, then the EHPLMN listing is used. If the listing is not present, or exists but does not contain any entries, then an HPLMN is used.

In the event that the EHPLM listing is maintained at the memory device and the listing includes entries, then the identities of such entries are compared with buffered identities buffered at the buffer 52. The results of the comparison indicate if there is correspondence of any of the identities that are compared. If a corresponding identity exists, that is to say, an identity buffered at the buffer 52 and forming an entry in the listing 46, then selection is made of the PLMN, and its associated WLAN, identified by its SSID. If comparison indicates more than one identity in common, then, the selection is made from amongst the corresponding identities according to a prioritization scheme. In the exemplary implementation, the entries of the EHPLMN listing further identify preferences, such as a numbered ordering, to indicate a preference associated with each of the entries. If the comparison indicates availability of a plurality of PLMNs that also are EHPLMNs, then selection is made according to the ordered preference. If other SSIDs have not been interrogated to find what PLMNs connect to those SSIDs and the EHPLMNs found are not the highest one then the wireless device shall continue to interrogate other SSIDs until either the highest EHPLMN has been found or no more SSIDs can be interrogated. Additionally, in the event that communication connection is not able to be completed with a first selection, then a second-preferred selection is made, if available.

The apparatus further includes a user interface 62, including a display device 64 and a user input actuator 66. In one exemplary implementation, selection is made automatically by the comparator and selector 58. That is, a determination is made of the existence of an EHPLMN listing with entries. If so, then an EHPLMN listing entry having a highest priority is selected therefrom. Otherwise, another listing is accessed and an HPLMN derived from an IMSI is selected. In another implementation, the selection is manually made, that is, by a user of the user equipment. When the result of the comparison made by the element 58 identifies an available 1-WLAN PLMN, then the identity of the PLMN is caused to be displayed upon the display device. And, user actuation of the user actuator 66 indicates user affirmation of the selection. If more than one PLMN is available, then the PLMNs are displayed on the display device 64, either together or sequentially. When displayed together, the user makes selection from amongst the displayed identities. Or, when the identities are displayed sequentially, the user actuates the user actuator to cause the successive displays or make selection, or non-selection, of the displayed identities.

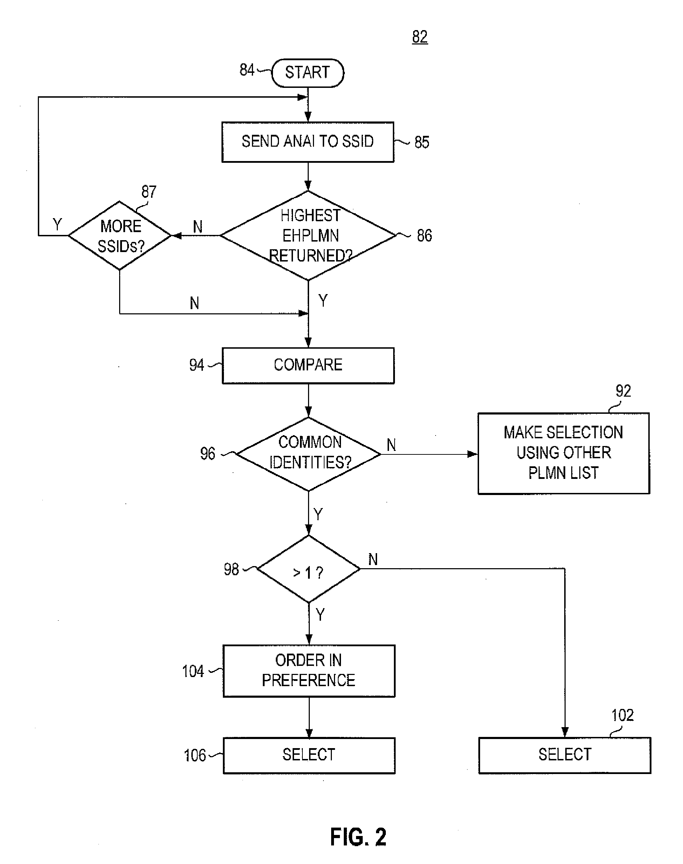

Figure 2 illustrates a process diagram, shown generally at 82, representative of the process of operation of an embodiment of the present invention. The process provides for selection of with which network 14, and PLMN 16 directly connected thereto, that the user equipment attempts to form a communication connection.

After entry, indicated by the start block 84, the user equipment interrogates a first SSID (I-WLAN) for its list by sending, indicated by the block 85, an Alternative Network Access Identifier (ANAI). A determination is made, indicated by the decision block 86 as to whether a highest (preference) EHPLMN indication is contained in the list returned responsive to the ANAI. If not, the no branch is taken to the decision block 87, and a determination is made as to whether additional SSIDs are available to be interrogated. If so, the yes branch is taken back to block 85.

The yes branch taken from the decision block 86 and the no branch taken from the decision block 87 extend to block 94. At the block 94, comparison is made between the entries contained on the EHLMN list and PLMN identities that are buffered at the step 86. A determination is made, indicated at the block 96, as to whether comparisons indicate whether any PLMN identities are both buffered and contained at the EHPLMN list. If not, the no branch is taken to the block 92. And, selection is made using another list, such as a user-selected PLMN listing or an operator-selected listing. Conversely, if the comparison is successful, the yes branch is taken to the decision block 98. A determination is made at the decision block 98 as to whether a plurality of PLMNs is identified during the comparison. If not, the no branch is taken to the block 102, and selection is made to attempt to form a communication connection with the WLAN with which the PLMN is associated. If, conversely, more than one identity is obtained as a result of the comparison, the yes branch is taken to the block 104, and a prioritization of the identified PLMNs is made. And, then, selection is made at the block 106 of a highest-priority, i.e., the most-preferred, PLMN and associated WLAN.

In the event that a communication connection is unsuccessful, then another PLMN and associated WLAN is selected.

Thereby, the concept of the EHPLMN is brought into I-WLAN PLMN selection. Operation determines whether an EHPLMN field is present and not empty. If not present, or is present and empty, then standard selection procedures are followed. If the field is present and contains entries, then selection is first attempted to be made of an I-WLAN PLMN noted in the EHPLMN field.

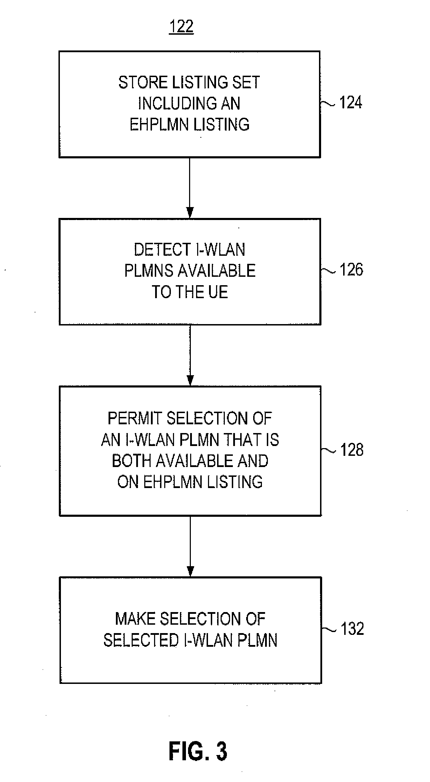

Figure 3 illustrates a method, shown generally at 122, representative of the method of operation of an embodiment of the present invention. The method facilitates network selection at user equipment.

First, and as indicated by the block 124, a Public Land Mobile Network Listing Set is stored. The listing set selectably has an equivalent Home Public Land Mobile Network listing. Then, and as indicated by the block 126, I-WLAN associated PLMN identities available to the user equipment are detected.

Then, and as indicated by the block 128, selection of a selected 1-WLAN PLMN identity both contained at the equivalent Home Public Land Mobile Network Listing and detected identity is permitted for selection. And, as indicated by the block 132, selection is made of a selected 1-WLAN PLMN identity.

Improved communication performance is possible as PLMNs that are EHPLMNs are identified, and selection is made to communicate with an available I-WLAN PLMN.

## Claims

1. Apparatus for facilitating network selection at a wireless device, UE, said apparatus comprising:
a memory device configured to store a public land mobile network, PLNM, listing set, the PLMN listing set selectably having an equivalent home public land mobile network, EHPLMN, listing;
a detector configured to detect I-WLAN, Interworking-Wireless Local Area Network, -associated, PLMN identities available to the wireless device; and
a selector adapted to receive an indication of the PLMN listing set and of detections made by said detector, said selector configured to permit selection responsive to comparisons made therebetween.

2. The apparatus of claim 1 wherein said memory device at which said PLMN listing set is stored comprises a removable storage element removably positionable at the wireless device.

3. The apparatus of claim 2 wherein the removable storage element comprising said memory device comprises at least one of: a R-UIM, a SIM, a compact flash, a MicroSD card, a Memory Stick SD card.

4. The apparatus of claim 1 wherein said detector is configured to detect broadcast of the PLMN identities.

5. The apparatus of claim 4 wherein the broadcast of the PLMN identities is made responsive to request made by the wireless device.

6. The apparatus of claim 4 further comprising a detector buffer configured to buffer the I-WLAN PLMN identities detected by said detector.

7. The apparatus of claim 6 wherein comparisons made by said selector are made between entries of the EHPLMN listing and I-WLAN PLMN identities buffered at said detector buffer.

8. The apparatus of claim 7 wherein the comparisons made by said selector identify I-WLAN PLMN identities, if any, also contained at the EHPLMN listing.

9. The apparatus of claim 8 wherein the entries of the EHPLMN further have associated therewith a priority indication and wherein said selector is further configured to order, in terms of priority, I-WLAN PLMN identities identified by said selector also to be contained at the EHPLMN listing.

10. The apparatus of claim 9 wherein said selector is further configured automatically to select the network ordered in highest priority by said selector.

11. The apparatus of claim 10 wherein said selector is further configured automatically to select the network ordered in lower priority by said selector upon failure of communication connection with the network ordered in the highest priority.

12. The apparatus of claim 9 further comprising a user interface having a user display and adapted to receive indications of the I-WLAN PLMN identities identified by said selector, said user display configured to display the indications of the I-WLAN PLMN identities thereon.

13. The apparatus of claim 12 wherein said user input actuator configured to receive user actuation thereof responsive to user selection of a selected I-WLAN PLMN identity displayed at the user display.

14. The apparatus of claim 12 wherein all of the indications of the I-WLAN PLMN identities identified by said selector also to be contained at the EHPLMN listing are concurrently displayed at the user display permitting user selection therefrom.

15. The apparatus of claim 12 wherein the indications of the I-WLAN PLMN identities identified by said selector also to be contained at the EHPLMN listing are sequentially displayed at the user display in order of priority.

16. A method for facilitating network selection at a wireless device, said method comprising the operations of:
storing a public land mobile network, PLMN, listing set, the PLMN listing set selectably having an equivalent home public land mobile network, EHPLMN, listing;
detecting I-WLAN, Interworking-Wireless Local Area Network, -associated PLMN identities available to the wireless device; and
permitting selection of a selected I-WLAN PLMN identity both contained at the EHPLMN listing and detected during said operation of detecting.

17. The method of claim 16 further comprising the operation, prior to said operation of detecting; of sending an alternative Network Access Identifier; and wherein detections made during said operation of detecting are made responsive to the sending of the alternative Network Access Identifier.

18. The method of claim 17 wherein said operation of sending is iteratively performed for each Wireless Local Area Network in whose coverage area that the wireless device is positioned.

19. The method of claim 16 wherein said operation of permitting selection further comprises automatically selecting the selected I-WLAN PLMN identity.

20. Network selection apparatus for a user equipment that facilitates HPLMN, Home Public Land Mobile Network selection, said apparatus comprising:
a HPLMN list maintained at the UE, the HPLMN list including Equivalent Home Public Land Mobile Networks, EHPLMNs; and
a selector configured to select a selected available one of the EHPLMNs responsive to comparisons made with entries on said HPLMN list.

## Amended claims

### Amended claims in accordance with Rule 137(2) EPC.

**1.** Apparatus (34) for facilitating network selection at a wireless device "UE" having a home public land mobile network "HPLMN", said apparatus (34) comprising:
a memory device (38) configured to store a public land mobile network "PLMN" listing set (42, 44, 46), the PLMN listing set including an equivalent home public land mobile network "EHPLMN" (46) listing, the EHPLMN listing (46) containing an ordered list of PLMNs that are equivalent to, or which are the same as, the HPLMN for said UE;
a detector (48) configured to detect Interworking-Wireless Local Area Network "I-WLAN"-associated PLMN identities available to the wireless device; and,
a selector (58) adapted to receive an indication of the PLMN listing set (42, 44, 46) and of detections made by said detector (48), said selector (56) configured to permit selection of a HPLMN in said EHPLMN listing, the selection of an HPLMN in said EHPLM listing being made according to the ordered list of PLMNs of said EHPLMN listing and in response to the result of said detections made by said detector (48).

**2.** The apparatus (34) of claim 1, wherein said memory device (38) at which said PLMN listing set (42, 44, 46) is stored comprises a removable storage element removably positionable at the wireless device.

**3.** The apparatus (34) of claim 2, wherein the removable storage element comprising said memory device (38) comprises at least one of: a Removable-User Identity Module "R-UIM", a Subscriber Identity Module "SIM", a compact flash, a MicroSD card, and a Memory Stick SD card.

**4.** The apparatus (34) of claim 1, wherein said detector (48) is configured to detect broadcast of the PLMN identities.

**5.** The apparatus (34) of claim 4, wherein the broadcast of the PLMN identities is made responsive to a request made by the wireless device.

**6.** The apparatus (34) of claim 4, further comprising a detector buffer (52) configured to buffer the I-WLAN PLMN identities detected by said detector (48).

**7.** The apparatus (34) of claim 6, wherein comparisons made by said selector (58) are made between entries of the EHPLMN listing (46) and I-WLAN PLMN identities buffered at said detector buffer (52).

**8.** The apparatus (34) of claim 7, wherein the comparisons made by said selector (58) identify I-WLAN PLMN identities, if any, also contained at the EHPLMN listing (46).

**9.** The apparatus (34) of claim 8, wherein the entries of the EHPLMN listing further have associated therewith a priority indication and wherein said selector (58) is further configured to order, in terms of priority, I-WLAN PLMN identities identified by said selector (58) also to be contained at the EHPLMN listing (46).

**10.** The apparatus (34) of claim 9, wherein said selector (58) is further configured automatically to select the network ordered in highest priority by said selector (58).

**11.** The apparatus (34) of claim 10, wherein said selector (58) is further configured automatically to select the network ordered in lower priority by said selector (58) upon failure of communication connection with the network ordered in the highest priority.

**12.** The apparatus (34) of claim 9, further comprising a user interface (62) having a user display (64) and adapted to receive indications of the I-WLAN PLMN identities identified by said selector (58), said user display configured to display the indications of the I-WLAN PLMN identities thereon.

**13.** The apparatus (34) of claim 12, wherein a user input actuator (66) is configured to receive user actuation thereof responsive to user selection of a selected I-WLAN PLMN identity displayed at the user display (64).

**14.** The apparatus (34) of claim 12, wherein all of the indications of the I-WLAN PLMN identities identified by said selector (58) also to be contained at the EHPLMN listing (46) are concurrently displayed at the user display (64) permitting user selection therefrom.

**15.** The apparatus (34) of claim 12, wherein the indications of the I-WLAN PLMN identities identified by said selector (58) also to be contained at the EHPLMN listing (46) are sequentially displayed at the user display (64) in order of priority.

**16.** A method (122) for facilitating network selection at a wireless device "UE", said UE having a home public land mobile network "HPLMN", said method (122) comprising the operations of:
storing (124) a public land mobile network "PLMN" listing set (42, 44), the PLMN listing set including an equivalent home public land mobile network "EHPLMN" listing (46), the EHPLMN listing (46) containing an ordered list of PLMNs that are equivalent to, or which are the same as, the HPLMN for said UE;
detecting (126) Interworking-Wireless Local Area Network "I-WLAN"-associated PLMN identities available to the wireless device; and,
permitting (128) selection of a selected I-WLAN PLMN identity both contained in the EHPLMN listing and detected during said operation of detecting, the selection of an HPLMN being made according to the order of the ordered list of PLMNs in said EHPLMN listing and in response to the result of the detecting step.

**17.** The method (122) of claim 16, further comprising the operation, prior to said operation of detecting (126); of sending an alternative Network Access Identifier; and wherein detections made during said operation of detecting are made responsive to the sending of the alternative Network Access Identifier.

**18.** The method (122) of claim 17, wherein said operation of sending is iteratively performed for each Wireless Local Area Network (14, 16) in whose coverage area the wireless device is positioned.

**19.** The method (122) of claim 16, wherein said operation of permitting (128) selection further comprises automatically selecting (132) the selected I-WLAN PLMN identity.
